# EUROPEAN PATENT APPLICATION

(11) **EP 4 575 401 A1**
(43) Date of publication of application: **25.06.2025**
(21) Application number: 23219997.6
(22) Date of filing: 22.12.2023
(51) Int. Cl.: G01C 21/00, G01C 21/34, A01B 69/00, B60W 40/06, E02F 9/26, G05D 1/246

(54) **MAPPING OF OFF-ROAD AREA**

(71) Applicant: Volvo Autonomous Solutions AB, 405 08 Göteborg (SE)
(72) Inventor: SKILLSÄTER, Calle, 644 36 TORSHÄLLA (SE); SJÖBERG, Johan, 722 19 VÄSTERÅS (SE); GÖTLIND, Helena, 438 56 HINDÅS (SE)
(74) Representative: Ström & Gulliksson AB

(57) **Abstract**

A computer system (**100**) comprising processing circuitry (**110**) is presented. The processing circuitry (**100**) is configured to obtain vehicle data (**210**) of a specific vehicle (**10**, **20**, **30**) and obtain map data (**260**) of a confined off-road area (**1**). The processing circuitry (**100**) is further configured to determine drivable area data (**325**) for the specific vehicle (**10**, **20**, **30**) within the confined off-road area (**1**) based on the vehicle data (**210**) and the map data (**260**); and provide the drivable area data (**325**) for routing of the specific vehicle (**10**, **20**, **30**) within the confined off-road area (**1**).

## Description

### TECHNICAL FIELD

The disclosure relates generally to routing planning. In particular aspects, the disclosure relates to off-road routing. The disclosure can be applied to heavy-duty vehicles, such as construction equipment and trucks among other vehicle types. Although the disclosure may be described with respect to a particular vehicle, the disclosure is not restricted to any particular vehicle.

### BACKGROUND

All vehicle requires routing to be safely operated. Generally, an operator of the vehicle surveils a surrounding area and controls the vehicle to avoid obstacles. Autonomous machines generally require routes that are pre-recorded or computed on the fly using, for instance, optimal control or similar methods.

In quarries and other very muddy conditions, the routing is challenging due to puddles, wheel tracks or other obstacles appearing almost randomly. Even manually operated vehicles are at risk of getting stuck in puddles if the puddle appears shallower than it is.

Having an autonomous or manually operated vehicle get stuck or damaged in an off-road area may cause costly downtime and the stuck or damaged vehicle may present an obstacle in itself preventing further work in the area.

### SUMMARY

According to a first aspect of the disclosure, a computer system comprising processing circuitry is presented. The processing circuitry is configured to: obtain vehicle data of a specific vehicle; obtain map data of a confined off-road area; determine drivable area data for the specific vehicle within the confined off-road area based on the vehicle data and the map data; and provide the drivable area data for routing of the specific vehicle within the confined off-road area. The first aspect of the disclosure may seek to reduce a risk of downtime within a confined off-road due to vehicles getting stuck, damaged or requiring maintenance. A technical benefit may include increasing the efficiency of operation within the confined off-road area.

Optionally in some examples, including in at least one preferred example, the processing circuitry is further configured to: obtain mission data for the specific vehicle, the mission data comprising an indication of a loading location and/or an unloading location within the confined off road area; determine one or more permitted routing trajectories for the specific vehicle to travel to/from the loading location and/or an unloading location based on the drivable area data and the mission data; and select one of the one or more permitted routing trajectories as a routing trajectory for routing of the specific vehicle. A technical benefit may include allowing to optimize a trajectory for a specific mission.

Optionally in some examples, including in at least one preferred example, the processing circuitry is configured to: select the routing trajectory based on an energy consumption indicator and/or a vehicle component wear indicator for the specific vehicle to complete the permitted routing trajectories. A technical benefit may include decreased cost of the mission.

Optionally in some examples, including in at least one preferred example, the mission data further comprises load weight data indicating a weight of goods to be loaded at the loading location and/or unloaded at the unloading location. A technical benefit may include considering also the weight when planning the mission potentially decreasing cost of the mission.

Optionally in some examples, including in at least one preferred example, the vehicle data comprises weight data for the specific vehicle, the map data comprises surface condition data for the confined off-road area, and the processing circuitry is further configured to: determine the drivable area data based on the weight data and the surface condition data. A technical benefit may include considering also the weight in combination with surface conditions when planning the mission potentially further decreasing cost of the mission.

Optionally in some examples, including in at least one preferred example, the vehicle data further comprises a traction capability of the specific vehicle, the map data comprises obstacle data indicating one or more obstacles of the confined off-road data, and the processing circuitry is further configured to: determine the drivable area data further based on the obstacle data and the traction capability of the specific vehicle. A technical benefit may include avoiding impassable obstacles and ignoring traversable obstacles such that a risk of the specific vehicle getting stuck is reduced and unnecessary detours are also reduced.

Optionally in some examples, including in at least one preferred example, wherein the traction capability comprises one or more of a wheel base, a ground clearance, traction functionality or an available drive torque of the specific vehicle.. A technical benefit may include avoiding impassable obstacles and ignoring traversable obstacles such that a risk of the specific vehicle getting stuck is reduced and unnecessary detours are also reduced.

Optionally in some examples, including in at least one preferred example, the processing circuitry is further configured to: obtain an indication of a proposed change of the map data; and determine proposed drivable area data for the specific vehicle within the confined off-road area based on the proposed updated map data; and provide the proposed drivable area data and the drivable area data as decision data for determining if the confined off-road area is to be modified in line with the proposed change of the map data or not. A technical benefit may include enabling simulation of changes in the map data to determine potential cost benefits of making changes to the confined off-road area.

Optionally in some examples, including in at least one preferred example, the map data comprises obstacle data indicating one or more obstacles of the confined off-road data and the proposed change of the map data comprises modification of at least one obstacle. A technical benefit may include enabling simulation of removal of obstacles from the confined off-road area and determine potential savings of doing so.

Optionally in some examples, including in at least one preferred example, the processing circuitry is further configured to: obtain mission data for the specific vehicle, the mission data comprising an indication of a loading location and/or an unloading location within the confined off road area; determine one or more permitted routing trajectories for the specific vehicle to travel to/from the loading location and/or an unloading location based on the drivable area data and the mission data; and select one of the one or more permitted routing trajectories as a routing trajectory for routing of the specific vehicle; wherein the processing circuitry is configured to: select the routing trajectory based on an energy consumption indicator and/or a vehicle component wear indicator for the specific vehicle to complete the permitted routing trajectories; wherein the mission data further comprises load weight data indicating a weight of goods to be loaded at the loading location and/or unloaded at the unloading location; wherein the vehicle data comprises weight data for the specific vehicle, the map data comprises surface condition data for the confined off-road area, and the processing circuitry is further configured to: determine the drivable area data based on the weight data and the surface condition data; wherein the processing circuitry is configured to: determine the permitted routing trajectories further based on a weigh profile for the specific vehicle for traveling to/from the loading location and/or the unloading location, wherein the weight profile is determined based on the weight data of the specific vehicle and the load weight data; wherein the vehicle data further comprises a traction capability of the specific vehicle, the map data comprises obstacle data indicating one or more obstacles of the confined off-road data, and the processing circuitry is further configured to: determine the drivable area data further based on the obstacle data and the traction capability of the specific vehicle; wherein the traction capability comprises one or more of a wheel base, a ground clearance, traction functionality or an available drive torque of the specific vehicle; wherein the processing circuitry is further configured to: obtain an indication of a proposed change of the map data; and determine proposed drivable area data for the specific vehicle within the confined off-road area based on the proposed updated map data; and provide the proposed drivable area data and the drivable area data as decision data for determining if the confined off-road area is to be modified in line with the proposed change of the map data or not; wherein the map data comprises obstacle data indicating one or more obstacles of the confined off-road data and the proposed change of the map data comprises modification of at least one obstacle; wherein the off-road area is a quarry or a mine. A technical benefit may include all the above mentioned technical benefits.

According to a second aspect of the disclosure, a site management system is presented. The site management system is for a confined off-road area and comprises the computer system of the first aspect. The second aspect of the disclosure may seek to reduce a risk of downtime within a confined off-road due to vehicles getting stuck, damaged or requiring maintenance. A technical benefit may include increasing the efficiency of operation within the confined off-road area.

According to a third aspect of the disclosure, a computer implemented method is presented. The method comprising: obtaining, by processing circuitry of a computer system, vehicle data of a specific vehicle; obtaining, by processing circuitry of the computer system, map data of a confined off-road area; determining, by processing circuitry of the computer system, drivable area data for the specific vehicle within the confined off-road area based on the vehicle data and the map data; and providing, by processing circuitry of the computer system, the drivable area data for routing of the specific vehicle within the confined off-road area. The third aspect of the disclosure may seek to reduce a risk of downtime within a confined off-road due to vehicles getting stuck, damaged or requiring maintenance. A technical benefit may include increasing the efficiency of operation within the confined off-road area.

According to a fourth aspect of the disclosure, a computer program product is presented. The computer program product comprising program code for performing, when executed by processing circuitry, the computer implemented method of the third aspect. The fourth aspect of the disclosure may seek to reduce a risk of downtime within a confined off-road due to vehicles getting stuck, damaged or requiring maintenance. A technical benefit may include increasing the efficiency of operation within the confined off-road area.

According to a fifth aspect of the disclosure, a non-transitory computer-readable storage medium is presented. The non-transitory computer-readable storage medium comprising instructions, which when executed by processing circuitry, cause the processing circuitry to perform the computer implemented method the third aspect. The fifth aspect of the disclosure may seek to reduce a risk of downtime within a confined off-road due to vehicles getting stuck, damaged or requiring maintenance. A technical benefit may include increasing the efficiency of operation within the confined off-road area.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** is an exemplar perspective view of a confined off-road environment according to an example.
**FIG. 2** is an exemplar partial perspective view of a confined off-road environment according to an example.
**FIG. 3** is an exemplar schematic view of a computer system according to an example.
**FIG. 4** is an exemplar block diagram of a computer system according to an example.
**FIG. 5** is an exemplar system diagram of a drivable map area determiner according to an example.
**FIG. 6** is an exemplar system diagram of a drivable map area determiner according to an example.
**FIG. 7** is an exemplar schematic view of a computer system according to an example.
**FIG. 8** is an exemplar block diagram of a method according to an example.
**FIG. 9** is an exemplar schematic view of a computer program produce according to an example.
**FIG. 10** is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

As mentioned, routing of vehicles may be challenging and especially in off-road conditions where the terrain may change due to weather, excavation and/or other factors. In for instance a quarry, obstacles may occur due to rocks falling of transporting vehicles, water forming deep muddy puddles, or draught forming difficult to traverse tracks in the surface. What is consider an obstacle may differ depending in a type of vehicle, for instance a heavy, strong loader may easily traverse obstacles that are impassable to a transporting vehicle such as a general road truck. This means that a drivable area within the quarry will differ depending on the vehicle. This is important when mission planning within the quarry as not all vehicles may efficiently reach all location within the quarry. Assuming a specific loading location within a quarry where a loading vehicle is to load material onto various transporting vehicles. It may very well be that the loading location is only (efficiently) accessible by transporting vehicle in the form of a heavy duty dump truck and not by general road trucks. This will prevent all transporting vehicles from accessing the loading area and it may be more efficient to either change the loading area and/or to clear a path to the loading area to allow all suitable transporting vehicles to access the loading are.

The present disclosure provides map data of drivable areas within a confined off-road area for a specific vehicle. This enables e.g. site management systems to more efficiently route vehicles, plan missions and clear paths. This reduces a risk of downtime due to e.g. vehicles getting stuck or damaged by obstacles.

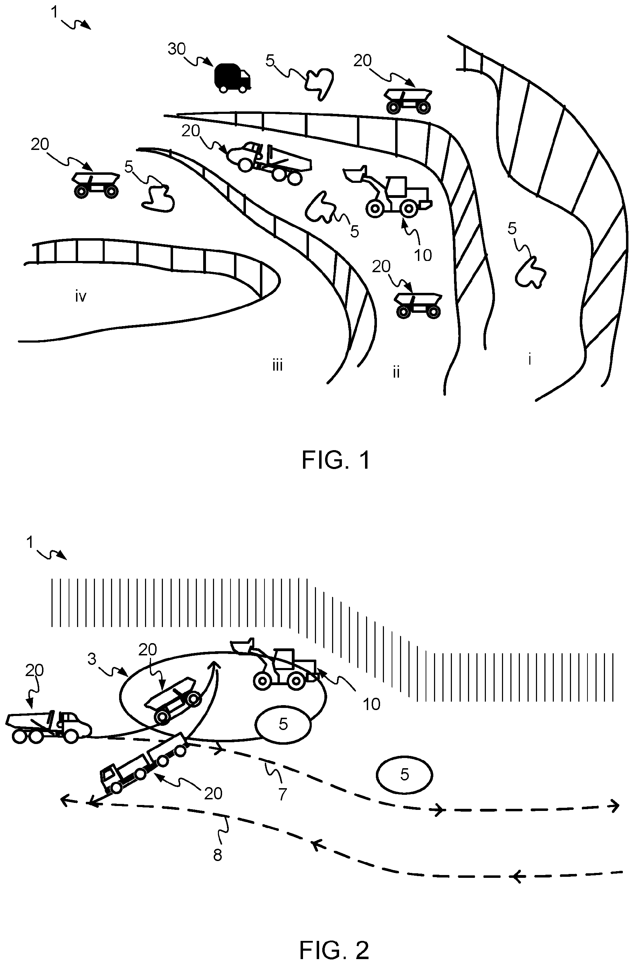

In **FIG. 1****,** an exemplary confined off-road area **1** is shown. The confined off-road area **1** is a quarry, and this will be used to exemplify the teachings of the present disclosure. However, the present disclosure is in no way limited to confined off-road areas **1** in the form of quarries, but other confined off-road areas are will within the scope such as, but not limited to, areas of logging, mining etc. The confined off-road area **1** of **FIG. 1** quarry comprising a fist level **i,** a second level **ii,** a third level **iii,** and a fourth level **iv,** wherein the first level **i** is a top level and the fourth level **iv** is a bottom level. In the quarry, loaders **10** are operating to load material onto transporting vehicles **20.** In **FIG. 1****,** two types of transporting vehicles **20** are shown, an autonomous hauler and an operator controlled hauler. Other vehicles **30** may be present in the quarry such as trucks or other vehicles for transportation of personnel, light equipment etc. Scattered throughout the confined off-road area **1** are obstacles **5.** The obstacles **5** may be puddles of mud, blocks of stone, wheel tracks, damaged or stuck vehicles etc. Any routing (manual or autonomous) of vehicles **10, 20, 30** within the confined off-road area **1** is advantageously configured to avoid the obstacles **5.** To this end, map data of the confined off-road area **1** generally comprise locations of obstacles **5** within the confined off-road area **1.**

Due to the volatile nature of the obstacles **5,** obstacles **5** may change in nature, disappear och occur seemingly randomly within the confined off-road area **1.** A sudden rain may create deep puddles and muddy roads that completely change the map data when it comes to obstacles. A few hours of sun may dry out a previously muddy road to create difficult (or impossible) to traverse wheel tracks. To this end, in some examples, obstacle data of the map data may be updated based on new obstacles **5,** changed obstacles **5** and/or removed obstacles **5.** In further examples, the map data is updated also based on features of the obstacles **5.**

In **FIG. 2****,** a partial view of a confined off-road area **1,** a quarry, is shown. Although the blasting is controlled and performed under strict safety regulations, there is some randomness as to where the broken down material will land and how it will be arranged. In **FIG. 2****,** an area where the material to be loaded onto transporting vehicles **20** is located in indicated as a loading area **3.** The transporting vehicle **20** will enter the loading area **3** allowing the loading vehicle **10** to load material onto the transporting vehicle **20.** Once sufficiently loaded, he transporting vehicle **20** exits the loading area **3** and transports the loaded material for e.g. further processing by a crusher which further reduces the size of the material.

Generally, the transporting vehicle **20** is configured with a longitudinal load carrying container for carrying the material. In order to efficiently load the load carrying container, the loading vehicle **10** may unload onto/into the load carrying container from a direction substantially perpendicular to a longitudinal extension of the load carrying container, this is generally the case when e.g. wheel loader unloads onto a transporting vehicle **20.** The loading vehicle **10** may unload onto/into the load carrying container from a direction substantially along a direction along the longitudinal extension of the load carrying container (generally from the front or back of the transporting vehicle **20**), this is generally the case when e.g. an excavator unloads onto a transporting vehicle **20.** To this end, either the transporting vehicle **20** or the loading vehicle **10** is preferably arranged to allow efficient loading of the transporting vehicle **20.** However, the loading vehicle **10** is advantageously able to efficiently access the material to be loaded onto the transporting vehicle **20** in order to reduce a time it takes to move each load of material onto the transporting vehicle **20.** The transporting vehicle **20** should advantageously be able to efficiently enter and exit the loading area **3** at the location of the actual loading in order to reduce cycle time for the transporting vehicle **20.**

In some examples, to e.g. increase safety at the confined off-road area **1,** the transporting vehicles **20** may be restricted to travel along predetermined paths **7, 8.** Generally, the paths **7, 8** are one-way such that an entry path 7 is defined for traveling to the loading area **3** and an exit path **8** is defined for traveling from the loading area **3.** Regardless of the presence of entry and/or exit paths **7, 8** the transporting vehicle **20** will enter the loading area **3** at some specific direction and will exit the loading area at some specific direction. The entry and/or exit paths **7, 8** may limit a number of options for the transporting vehicle to enter/exit the loading area **3** and/or make some locations of the loading area **3** difficult (takes long time to access/exit) or impossible to access. The confined off-road area **1** and/or the loading area **3** may comprise one or more obstacles **5.** As mentioned, the obstacles **5** may limit a number of options for the transporting vehicle **20** to enter/exit the loading area **3,** and/or a number of locations for the loading vehicle **10** to load from.

In addition to the above and as previously indicated, different transporting vehicles **20** and different loading vehicles **10** may have different maneuverability. The maneuverability may affect an ability of a vehicle **10, 20** to access a specific location within the loading area **3.** The maneuverability of a vehicle **10, 20** may be a factor affected by e.g. turn radius (which varies significantly between e.g. Ackermann steered vehicles and articulated vehicles), chassis (a robust chassis and off-road suspension system generally allow a vehicle to absorb shocks and impacts while maintaining stability), suspension (a well-designed suspension helps keep all wheels in contact with the ground, improving traction and maneuverability), ground clearance (a distance between the lowest point of the vehicle's **10, 20** undercarriage and the ground, higher ground clearance prevents the vehicle **10, 20** from getting stuck on uneven surfaces or high obstacles **5**), traction and differential systems (vehicles provided with features like all-wheel drive (AWD), four-wheel drive (4WD), or differential locks generally have better traction on slippery or uneven surfaces compared to vehicles **10, 20** without such systems), tires (off-road tires with aggressive tread patterns provide better grip on challenging surfaces like mud, sand, and rocks), water fording depth (some off-road vehicles have the capability to ford through water bodies without causing damage to vehicle components), engine power and torque (sufficient power and torque enable a vehicle **10, 20** to overcome resistance caused by challenging terrains and obstacles), weight distribution (a well-balanced weight distribution helps maintain stability while traversing obstacles, especially on uneven terrain), structural strength (vehicles **10, 20** designed with strong and durable materials can withstand impacts and stresses encountered during off-road driving) etc.

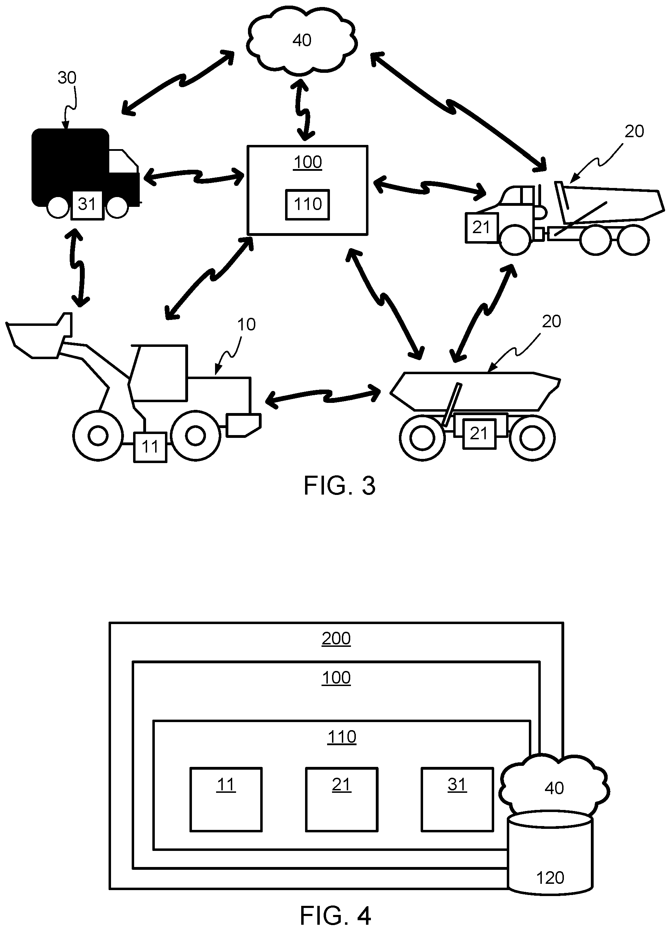

In **FIG. 3****,** a schematic view of a computer system **100** is shown. The computer system **100** comprises processing circuitry **110** configured to perform, or cause performance of one or more actions, tasks or features relating to teachings of the present disclosure. In **FIG. 3****,** the computer system **100** is in communication, advantageously wirelessly, with one or more vehicles **10, 20, 30** within the confined off-road area **1.** The computer system **100** may, in some examples, further be in communication with a cloud server **40** (or cluster of servers). To this end, the vehicles **10, 20, 30** comprises processing circuitry **11, 21, 31** for controlling, or causing communication, with the computer system **100.**

As emphasis of the present application is off-road routing, details of all features of the vehicles **10, 20, 30** within the confined off-road area **1** will be kept at a minimum. However, as the skilled person will appreciate, the vehicles **10, 20, 30** comprises all necessary vehicle units and associated functionality such that it may operate as the skilled person would expect of a vehicle **10, 20, 30,** such as a powertrain, chassis, and various control systems. However, a vehicle **10, 20, 30** of the present disclosure comprises one or more propulsion sources. The propulsion source may be any suitable propulsion source exemplified by, but not limited to, one or more or a combination of an electrical motor, a combustion engine such as a diesel, gas or gasoline powered engine. The vehicle **10, 20, 30** further comprises an energy source suitable for providing energy for the propulsion source. That is to say, if the propulsion source is an electrical motor, a suitable energy source would be a battery or a fuel cell. The vehicle **10, 20, 30** further comprises sensor circuitry arranged to detect, measure, sense or otherwise obtain data relevant for operation of the vehicle **10, 20, 30.** The data relevant for operation of the vehicle **10, 20, 30** may be exemplified by, but not limited to, one or more of a speed of the vehicle **10, 20, 30,** a weight of the vehicle **10, 20, 30,** an inclination of the vehicle **10, 20, 30,** a status (state of charge, fuel level etc.) of the energy source of the vehicle **10, 20, 30** etc.

In order to communicate with the computer system **100,** the vehicle **10, 20, 30** may comprise communications circuitry configured for communication with, to the vehicle **10, 20, 30,** external devices. The communications circuitry is advantageously a communications circuitry configurable to provide a wireless communication interface exemplified by, but not limited to, Wi-Fi, Bluetooth, Zigbee, Z-Wave, LoRa, Sigfox, 2G (GSM, CDMA), 3G (UMTS, CDMA2000), 4G (LTE), 5G (NR) etc.

As partly indicated in **FIG. 3** the vehicles **10, 20, 30** may communicate directly with each other and/or meshed through computer system **100,** or other vehicles **10, 20, 30.** Communication with the other vehicles **10, 20, 30** may be provided by the previously mentioned wireless interfaces, and/or any suitable vehicle-to-vehicle (V2V) communications protocol exemplified by, but not limited to Dedicated Short-Range Communications (DSRC), Cellular Vehicle-to-Everything (C-V2X), IEEE 802.11p, LTE-V (LTE-V2X), 5G NR (New Radio) V2X, etc.

The vehicle **10, 20, 30** may further be operatively connected to a Global Navigation Satellite System (GNSS) exemplified by, but not limited to, global positioning system (GPS), Globalnaya Navigatsionnaya Sputnikovaya Sistema (GLONASS), Galileo, BeiDou Navigation Satellite System, Navigation with Indian Constellation (NavIC) etc. The vehicle **10, 20, 30** may be configured to utilize data obtain from the GNSS **10, 20, 30** to determine a geographical location of the vehicle **10, 20, 30.**

It should be mentioned that the centralized description of the computer system **100** shown in **FIG. 3** is one example. In **FIG. 4****,** another example of a computer system **100** according to the present disclosure is presented. In **FIG. 4****,** the processing circuitry **110** of the computer system **100** comprises processing circuitry **11** of one or more loaders **10** within the confined off-road area **1.** Optionally, in some examples, the processing circuitry **110** of the computer system **100** may further comprises processing circuitry **21** of one or more haulers **20** within the confined off-road area **1.** Additionally, or alternatively, in some examples, the processing circuitry **110** of the computer system **100** may further comprises processing circuitry **31** of one or more other vehicles **30** within the confined off-road area **1.** Additionally, or alternatively, in some examples, the processing circuitry **110** of the computer system **100** may further comprise part of, or be comprised by, the cloud server **40.** As seen in **FIG. 4****,** the computer system **100** may form part of a site management system **200.** The site management system **200** may comprise (or be operatively connected to) the computer system **100.** The site management system **200** may obtain any data available to the computer system **100.** The site management system **200** may configured the computer system **100** to perform or cause any action or feature described herein.

The site management system **200** may be a software system, a hardware system or a system of both software and hardware. The site management system **200** may be configured to assist in planning, managing, and optimizing operation of an associated site, i.e. the confined off-road area **1.** The site management system **200** may be configured to e.g. schedule and monitor equipment maintenance and repair, inventory levels of materials and supplies, production and productivity metrics, safety and compliance data, employee training and development records etc.

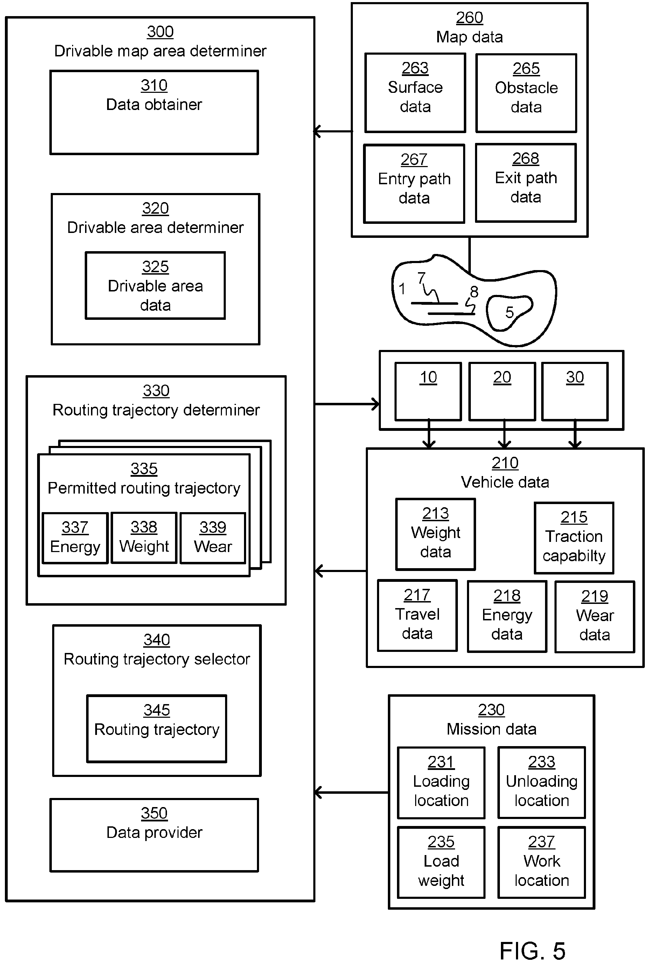

In **FIG. 5** an exemplary software architecture of a drivable map area determiner **300** is shown. The drivable map area determiner **300** may be implemented as part of the computer system **100,** the site management system **200** and/or the processing circuitry **110** of the computer system **100** may be configured to perform, or cause performance of the functions, features or examples of the drivable map area determiner **300.**

The drivable map area determiner **300** comprises a data obtainer **310** and a drivable area determiner **320** and a data provider **350.** In some examples, the drivable map area determiner **300** further comprises and optional routing trajectory determiner **330** and an optional routing trajectory selector **340.**

The data obtainer **310** is configured to obtain map data **260** of a confined off-road area **1.** The map data **260** may be obtained from a storage device **120** that may e.g. be external to the drivable map area determiner **300,** connected to the cloud server **40** and/or form part of the computer system **100.** The map data **260** may comprise any data relevant for describing the confined off-road area **1.**

In some examples, the map data **260** comprise, or is configured to comprise, obstacle data **265.** The obstacle data **265** is associated with obstacles **5** within the confined off-road area **1.** The obstacle data **265** may comprise any data suitable for describing an obstacle **5** within confined off-road area **1.** Obstacle data **265** may comprise e.g. position data, size data, and/or classification data **225** of the obstacle **5.** The classification data may comprise a type of the obstacle **5.** The type of the obstacle **5** may be one of e.g. a rock, a boulder, a hole, a water crossing, a puddle, a mud pit, a cam, a pile of snow, a pile of gravel, loose gravel, loose sand, a patch of ice, a steep incline, a steep decline, a tree or other vegetation, a pothole, construction debris, construction equipment etc. The classification data of the obstacle **5** may additionally, or alternatively, comprise one or more of an indication of a weight of the obstacle **5,** and/or indication of a viscosity of the obstacle **5,** an indication of a movability of the obstacle **5.** The obstacle data **265** may further indicate how difficult an associated obstacle **5** is to traverse. This may be described by a traction capability required to traverse the obstacle **5.** It should be mentioned that the a traction capability of a vehicle **10, 20, 30** may depend on a speed of the vehicle and to this end, the obstacle data **265** may associate the required traction capability with a minimum speed and/or a maximum speed of the vehicle **10, 20, 30.** Additionally, or alternatively, the map data **260** may comprise surface condition data **263,** or surface data **263** for short. The surface data **263** may comprise on or more of topography data (e.g. high points, low points, elevation changes etc.), slope data (e.g. steepness, direction of slopes, etc.), material data (e.g. rocks, minerals, soil, etc.), density data (e.g. metric of how densely packed the surface is), texture data (e.g. roughness, smoothness, etc.). The map data **260** may further comprise entry path data **267** indicating a location of the entry path **7** within the confined off-road area **1.** Further, the map data **260** may further comprise exit path data **268** indicating a location of the exit path **8** within the confined off-road area **1.**

The data obtainer **310** is further configured to obtain vehicle data **210** for a specific vehicle **10, 20, 30.** The specific vehicle **10** may be any vehicle **10, 20, 30** within the confined off-road area **1.** The vehicle data **210** may comprise any data for the vehicle **10, 20, 30.** In some examples, the vehicle data **210** comprise weight data **213** of the specific vehicle **10, 20, 30.** The weight data **213** may describe a current weight of the specific vehicle **10, 20, 30,** an unloaded weight of the specific vehicle **10, 20, 30,** a weight of a cargo of the specific vehicle **10, 20, 30** etc. In some examples, the vehicle data **210** may comprise a traction capability **215** of the specific vehicle **10, 20, 30.** The traction capability **215** of the specific vehicle **10, 20, 30** may describe an ability of the vehicle to traverse obstacles **5.** The traction capability of the specific vehicle **10, 20, 30** may depend on e.g. chassis (a robust chassis and off-road suspension system generally allow a vehicle to absorb shocks and impacts while maintaining stability), suspension (a well-designed suspension helps keep all wheels in contact with the ground, improving traction and maneuverability), ground clearance (a distance between the lowest point of the specific vehicle's **10, 20, 30** undercarriage and the ground, higher ground clearance prevents the specific vehicle **10, 20, 30** from getting stuck on uneven surfaces or high obstacles), traction and differential systems (vehicles provided with features like all-wheel drive (AWD), four-wheel drive (4WD), or differential locks generally have better traction on slippery or uneven surfaces compared to specific vehicles **10, 20, 30** without such systems), tires (off-road tires with aggressive tread patterns provide better grip on challenging surfaces like mud, sand, and rocks), water fording depth (some off-road vehicles have the capability to ford through water bodies without causing damage to vehicle components), engine power and torque (sufficient power and torque enable a specific vehicle **10, 20, 30** to overcome resistance caused by challenging terrains and obstacles), weight distribution (a well-balanced weight distribution helps maintain stability while traversing obstacles, especially on uneven terrain), structural strength (specific vehicles **10, 20, 30** designed with strong and durable materials are able to withstand impacts and stresses encountered during off-road driving) etc. The vehicle data **210** may, in some examples, comprise travel data **217** of the specific vehicle **10, 20, 30.** The travel data **217may** describe one or more of a maximum speed, a minimum speed or a preferred travel speed of the specific vehicle **10, 20, 30.** The vehicle data **210,** may in some examples, comprise energy data **218** of the specific vehicle **10, 20, 30.** The energy data **218** may indicate energy consumption of the specific vehicle **10, 20, 30** e.g. at different loads, speeds, inclinations etc. The vehicle data **210,** may in some examples, comprise wear data **219** of the specific vehicle **10, 20, 30.** The wear data **219** may indicate a wear of the specific vehicle **10, 20, 30** i.e. how much damage or how long time is the specific vehicle **10, 20, 30** permitted to travel at e.g. different loads, speeds, inclinations etc. before service or maintenance is required.

In some examples, the data obtainer **310** may be configured to obtain mission data **230.** The mission data **230** may be associated with a specific vehicle **10, 20, 30,** but may, in some examples, be general without specifying a specific vehicle **10, 20, 30.** The mission data describe, at least part of, a work mission for a specific vehicle **10, 20, 30** within the confined off-road area **1.** The mission data **230** may describe a loading location **231** within the confined off-road area **1,** i.e. a location at which goods is to be loaded onto the specific vehicle **10, 20, 30.** The mission data **230** may describe an unloading location within the confined off-road area **1,** i.e. a location at which goods loaded onto the specific vehicle **10, 20, 30** is to be unloaded. The mission data **230** may describe a general work location **237** describing a location where e.g. an obstacle **5** is to be removed, a vehicle **10, 20, 30** needs saving etc. The mission data **230** may further comprise a load weight **235** of the mission, i.e. a load that the specific vehicle **10, 20, 30** is expected to load and/or unload and the respective loading location **231** or unloading location **233.**

The drivable area determiner **320** of the drivable map are determiner **300** is configured to determine drivable area data **325** for the specific vehicle **10, 20, 30** within the confined off-road area **1.** As the name indicates, the drivable area data **325** is data that indicates what regions (areas, sections, portions etc.) of the confined off-road area **1** that are drivable for a specific vehicle **10.** To this end, the drivable area determiner **320** is configured to determine the drivable area data **325** based on the map data **260** and the vehicle data **210.** This means that different specific vehicle **10, 20, 30** may have different drivable area **325** depending on e.g. obstacle data **265** indicating that some obstacles **5** are traversable by some specific vehicles **10, 20, 30** and impassable to other specific vehicles **10, 20, 30.** The drivable area determiner **320** may be configured to determine the drivable area data **325** based on the obstacle data **265** and the traction capability **215** of the specific vehicle **10, 20, 30.** That is to say, if the obstacle data **265** indicate that an obstacle **5** is impassable by the traction capability **215** of the specific vehicle **10, 20, 30,** an area blocked by that obstacle **5** will not be part of the drivable area data **325** for the specific vehicle **10, 20, 30.** Correspondingly, if the obstacle data **265** indicate that an obstacle **5** is passable/traversable by the traction capability **215** of the specific vehicle **10, 20, 30,** that obstacle **5** is ignored and a footprint, i.e. an area occupied by the obstacle **5,** will form part of the drivable area data **325** for the specific vehicle **10, 20, 30.** Additionally, or alternatively, the drivable area determiner **320** may be configured to determine the drivable area data **325** based on the obstacle data **265,** the travel data **217** and optionally the traction capability of the specific vehicle **10, 20, 30.** This means that obstacles **5** that require a speed higher than a minimum speed of the specific vehicle **10, 20, 30** and/or a speed lower than a maximum speed of the specific vehicle **10, 20, 30** are ignored when determining the drivable area data **325** for the specific vehicle **10, 20, 30.**

It should be mentioned that the drivable area data **325** may specify minimum and/or maximum speeds for the specific vehicle **10, 20, 30** at some areas of the drivable area data **325.** If some obstacles **5** require a certain minimum or maximum speed to traverse, the specific vehicle **10, 20, 30** will have to be at, below or above that certain speed in order to traverse the obstacle **5.** Further, the traction capability **215** of the specific vehicle **10, 20, 30** may change with a weight of the specific vehicle **10, 20, 30.** That is to say, the specific vehicle **10, 20, 30** may be able to traverse some obstacles **5** when the specific vehicle **10, 20, 30** is unloaded, but may be unable to traverse the same obstacles when the specific vehicle **10, 20, 30** is loaded. Correspondingly, maximum and minimum speeds of the specific vehicle **10, 20, 30** may change depending on a current weight of the specific vehicle **10, 20, 30.** To this end, the drivable area data **325** may be provided not only for a specific vehicle **10, 20, 30,** but also for specific loads of the specific vehicle **10, 20, 30.**

The drivable area **325** for a specific vehicle **10, 20, 30** allows e.g. a site management system **200** to quickly and easily determine what vehicles are able to go where and may decide to increase a number of a specific type of specific vehicle **10, 20, 30** of a fleet of vehicles and decrease a number of a different type of specific vehicle **10, 20, 30** from the fleet of vehicles.

In a non-limiting example, assume that an obstacle **5** in the form of a deep pool of water is preventing e.g. a tractor trailer transporting vehicle **20** from accessing the second level **ii** of the confined off-road area **1.** The drivable area data **325** for the tractor trailer transporting vehicle **20** will clearly indicate that the second level **ii** is not part of the drivable area and inaccessible for the tractor trailer transporting vehicle **20.** Rather than attempting to traverse the obstacle **5** and risk getting stuck or damaged, the tractor trailer transporting vehicle **20** may be safely routed to other part of the confined off-road area **1.**

To this end, the data provider **350** is configured to provide the drivable area data **325** for routing of the specific vehicle **10, 20, 30.** This may means providing the drivable area data **325** to the specific vehicle **10, 20, 30** such that an operator, or an autonomous controller, of the specific vehicle **10, 20, 30** may safely route the specific vehicle **10, 20, 30.** In some examples, the drivable area data **325** may be provided to the site management system **200** for e.g. planning, fleet management, obstacle management etc. The drivable area data enables differentiation in routing between specific vehicle **10, 20, 30** based on their respective drivable area data **325.**

As mentioned, in some examples, the drivable map are determiner **300** may comprise the routing trajectory determiner **330.** The routing trajectory determiner **330** is configured to determine at least one permitted routing trajectory **335** based on the mission data **230** and the drivable area data **325** of the specific vehicle **10, 20, 30.** The permitted routing trajectory **335** indicate a route for the specific vehicle **10, 20, 30** to complete the work mission according to the mission data **230** (e.g. travel to the loading location **231** and then to the unloading location **233).** In some examples, more than one permitted routing trajectory may be available to complete the mission specified by the mission data **230.** To this end, the routing trajectory selector **340** may be configured to determine a plurality of different permitted routing trajectories **335.** In some examples, for specific mission data **230,** a plurality of permitted routing trajectories **335** are determined for one specific vehicle **10, 20, 30.** In some examples, for specific mission data **230,** a plurality of permitted routing trajectories **335** are determined where at least two permitted routing trajectories are associated with different specific vehicles **10, 20, 30.** In some examples, the routing trajectory determiner may be configured to associate each permitted routing trajectory with a weight profile **338.** The weight profile **338** describe how a weight of the specific vehicle **10, 20, 30** changes throughout the permitted routing trajectory **335,** i.e. throughout the mission. For instance, the weight profile **338** will indicate an increase of a vehicle weight at the loading location **230** corresponding to the load weight **235** of the mission data **230** and a corresponding decrease in vehicle weight at the unloading location **233** (assuming the entire load weight **235** is unloaded at the same unloading location **233** which may not always be the case). As indicated above, the weight profile **338** may cause the drivable area data **325** to change, such that, when loaded, the specific vehicles **10, 20, 30** is forced to take a different route to the unloading location **233** than from the unloading location **231** (assuming back and forth travel). To this end, the routing trajectory determiner **330** may be configured to determine a plurality of different permitted routing trajectories **335** wherein at least two permitted routing trajectories **335** differ in the load weight **235** of the mission data **230;** it may be more cost effective to load less if this allows the specific vehicle to take a significantly shorter or otherwise more energy efficient route when loaded. Based on e.g. vehicle data **210** and/or map data **260,** each permitted routing trajectory **335** may be associated with an energy consumption indicator **337** indicating an expected energy consumption of the specific vehicle **10, 20, 30** for competing the respective permitted routing trajectory. Additionally, or alternatively, based on e.g. vehicle data **210** and/or map data **260,** each permitted routing trajectory **335** may be associated with a wear indicator **339** indicating an expected wear of the specific vehicle **10, 20, 30** for competing the respective permitted routing trajectory. Additionally, or alternatively, based on e.g. vehicle data **210** and/or map data **260,** each permitted routing trajectory **335** may be associated with further data (not shown) such as a time to complete the permitted routing trajectory **335,** a cost for competing the permitted routing trajectory **335** etc.

Determining the wear indicator **339** and/or the energy consumption indicator **337** further based on the weight profile **338** for the specific vehicle **10, 20, 30** and the specific permitted routing trajectory is beneficial as the estimated indicator **337, 339** will have improved accuracy. By further adding in e.g. topography of the map data **260,** very accurate models of energy consumption and wear for different permitted routing trajectories are possible.

As mentioned, in some examples, the drivable map are determiner **300** may comprise the routing trajectory selector **340.** The routing trajectory selector **340** is configured to select one of the plurality of permitted routing trajectories **335** as a routing trajectory **345** for the specific vehicle **10, 20, 30.** The routing trajectory selector **340** may be configured to select the routing trajectory **345** from the permitted routing trajectories **335** based on any suitable data. In some examples, the routing trajectory selector **340** is configured to select the routing trajectory **345** from the permitted routing trajectories **335** based on the energy consumption indicator **337.** In some examples, the routing trajectory selector **340** is configured to select the routing trajectory **345** from the permitted routing trajectories **335** based on the wear indicator **339.** In some examples, the routing trajectory selector **340** is configured to select the routing trajectory **345** from the permitted routing trajectories **335** based on the time it takes to complete the permitted routing trajectory **335.** In some examples, the routing trajectory selector **340** is configured to select the routing trajectory **345** from the permitted routing trajectories **335** by weighting two or more metrics (e.g. weight, time, cost, energy, wear, etc.) of the permitted routing trajectories **335.**

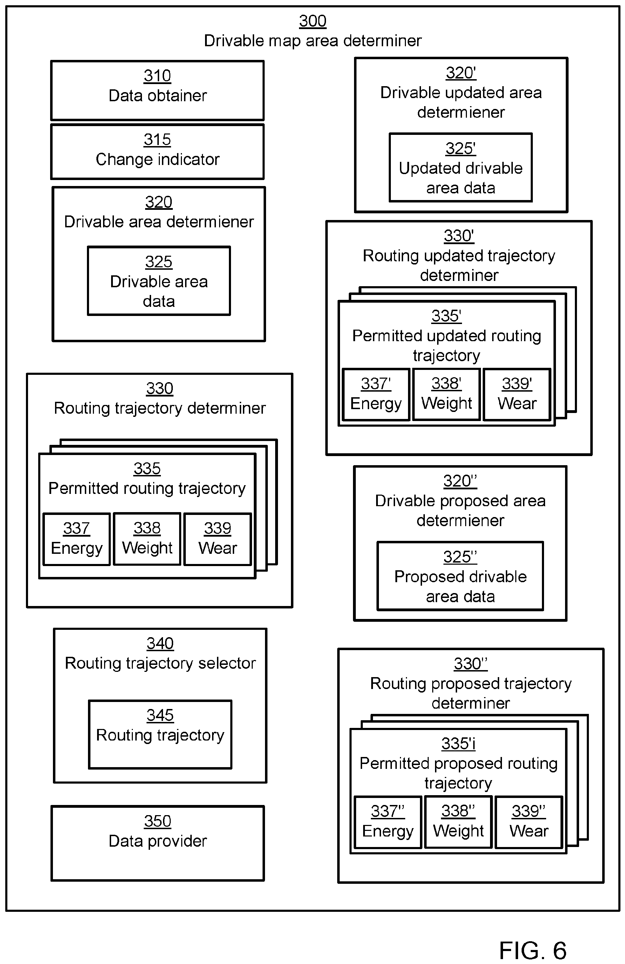

In **FIG. 6****,** a drivable map are determiner **300** according to an optional example is shown. The drivable map are determiner **300** of **FIG. 6** may comprise all features presented in reference to **FIG. 5** and these will not be repeated once more in reference to **FIG. 6****.** The drivable map are determiner **300** of **FIG. 6** further comprise a change indicator **315.** The change indicator **315** is configured to indicate changes in data relevant for providing the drivable area data **325.** Such changes may comprise changes in vehicle data **210,** changes in map data **260** and/or changes in mission data **230.** The change indicator **315** may monitor the vehicle data **210,** the map data **260** and/or the mission data **230** to detect any changes. In some examples, the change indicator **315** may be instructed to simulate a proposed change. That is to say, the map are determiner **300** and/or an operator of the map are determiner **300,** may instruct the data indicator **315** to indicate a specific change in the vehicle data **210,** the map data **260** and/or the mission data **230.** Such changes may comprise removal or reworking of an obstacle **5** indicated by the map data **260,** change of a load weight **235** indicated by the mission data **230,** change of weight data **213** of the vehicle data **210,** change of a type of vehicle etc.

The drivable map area determiner **300** of **FIG. 6** further comprise a drivable updated area determiner **320'.** The drivable updated area determiner **320'** is configured to, in response to the change indicator **315** indicating a change, determine updated drivable area data **325'** based on the updated vehicle data **210,** map data **260** and/or the mission data **230.** The updated drivable area data **325'** may be provided to the data provider **350** for routing of the specific vehicle **10, 20, 30** and/or to an routing updated trajectory determiner **330'** for determining of one or more updated permitted routing trajectories **335'.** The updated permitted routing trajectories **335'** may be determined correspondingly to the permitted routing trajectories **335** introduced in reference to **FIG. 5** and may consequently comprise updated energy consumption indicator **337',** an updated weight profile **338'** and/or an updated wear indicator **339'.** It should be mentioned that, if only the mission data **230** has changed, the drivable updated area determiner **320'** may be omitted and the updated mission data may be provided to the routing updated trajectory determiner **330'** together with the drivable area data **325.**

The drivable updated area determiner **320'** and the routing updated trajectory determiner **330'** allows for agility in the drivable map area determiner **300.** The confined off-road area **1** may be susceptible to changes due to weather, dropping of rocks, changes in locatins of the levels **i, ii, iii, iv** etc. which all may cause vehicles **10, 20, 30** difficulties in routing. As soon as changes are detected, these may be considered when providing drivable area data **325** for routing of the specific vehicle **10, 20, 30.** This reduces a risk that vehicle **10, 20, 30** are damaged or get stuck.

Correspondingly, drivable map are determiner **300** of **FIG. 6** may comprise a drivable proposed area determiner **320''.** The drivable proposed area determiner **320''** is configured to, in response to the change indicator **315** indicating a proposed change (i.e. a change not detected by differences in the data), determine proposed drivable area data **325''** based on the proposed vehicle data **210,** map data **260** and/or the mission data **230.** The proposed drivable area data **325''** may be provided to the data provider **350** for routing of the specific vehicle **10, 20, 30** and/or to an routing proposed trajectory determiner **330"** for determining of one or more proposed permitted routing trajectories **335''.** The proposed permitted routing trajectories **335''** may be determined correspondingly to the permitted routing trajectories **335** introduced in reference to **FIG. 5** and may consequently comprise proposed energy consumption indicator **337'',** an proposed weight profile **338''** and/or an proposed wear indicator **339".** It should be mentioned that, if only the mission data **230** has changed, the drivable proposed area determiner **320''** may be omitted and the proposed mission data may be provided to the routing proposed trajectory determiner **330''** together with the drivable area data **325.**

The drivable proposed area determiner **320'** and the routing proposed trajectory determiner **330'** allows for simulation of changes in data for the drivable map are determiner **300.** For instance, by simulating removal of one or more obstacles **5** the permitted routing trajectories **335** may be compared to the proposed permitted routing trajectories **335"** and benefits from removing the obstacle(s) **5** may be evaluated. Further to this, mission data **230** may be provided indicating a mission to remove the obstacle(s) 5 and the cost of executing this mission may be compared to the gains provided by the proposed permitted routing trajectories **335".**

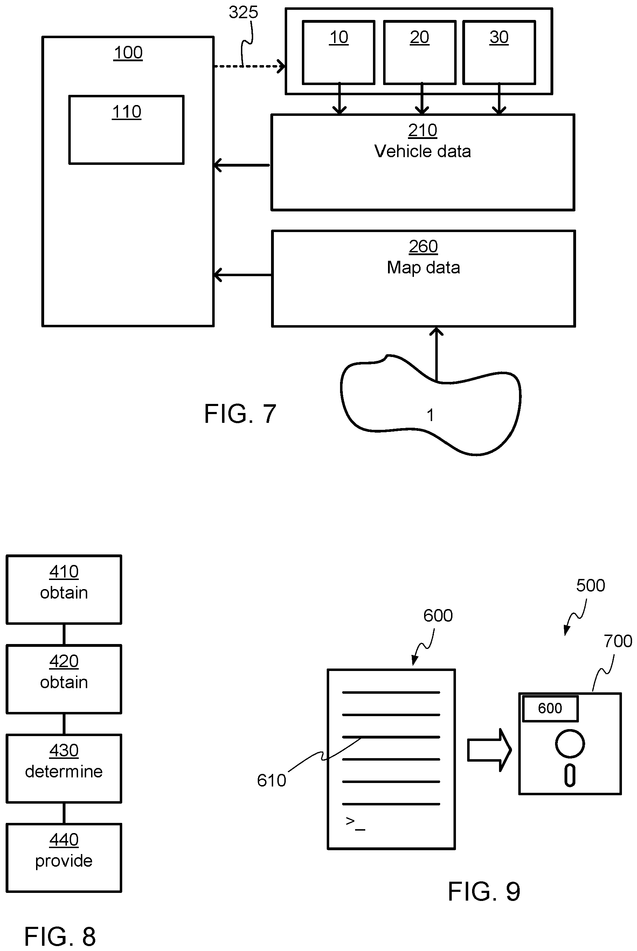

**FIG. 7** is an exemplary computer system **100** according to the present disclsore. The computer system **100** comprises processing circuitry **110** configured to obtain vehicle data **210** of a specific vehicle **10, 20, 30** and to obtain map data **260** of a confined off-road area **1.** The processing circuitry **110** is further configured to determine drivable area data **325** for the specific vehicle **10, 20, 30** within the confined off-road area **1** based on the vehicle data **210** and the map data **260,** and provide the drivable area data **325** for routing of the specific vehicle **10, 20, 30** within the confined off-road area **1.**

The computer system **100** of **FIG. 7** may be modified to comprise, or cause any feature, effect or example presented herein.

In **FIG. 8****,** a block diagram of a method **400** according to the present disclosure is shown. The method **400** may be a computer implemented method. The computer system **100** of the present disclosure may be configured to perform, or cause, one or more features of the method **400.** The site management system **200** of the present disclosure may be configured to perform, or cause, one or more features of the method **400.** The method **400** may be modified to comprise, or cause any feature, effect or example presented herein.

The method **400** comprises obtaining **410** vehicle data **210** of a specific vehicle **10, 20, 30** and obtaining **420** map data **260** of a confined off-road area **1.** The obtaining **410, 420** may be performed as indicated e.g. in reference to the data obtainer **310** introduced with reference to **FIG. 5****.** The method **400** further comprises determining, **430** drivable area data **325** for the specific vehicle **10, 20, 30** within the confined off-road area **1** based on the vehicle data **210** and the map data **260.** The determining **430** may be performed as indicated e.g. in reference to the drivable area determiner **320** introduced with reference to **FIG. 5****.** The method **400** further comprises providing **440** the drivable area data **325** for routing of the specific vehicle **10, 20, 30** within the confined off-road area **1.** The providing **440** may be performed as indicated e.g. in reference to the data provider **350** introduced with reference to

### FIG. 5.

In **FIG. 9** a computer program product **500** is shown. The computer program product **500** comprises a computer program **600** and a non-transitory computer readable medium **700.** The computer program **600** may be stored on the computer readable medium **700.** The computer readable medium **700** is, in **FIG. 9****,** exemplified as a vintage 5,25" floppy disc, but may be embodied as any suitable non-transitory computer readable medium such as, but not limited to, hard disk drives (HDDs), solid-state drives (SSDs), optical discs (e.g., CD-ROM, DVD-ROM, CD-RW, DVD-RW), USB flash drives, magnetic tapes, memory cards, Read-Only Memories (ROM), network-attached storage (NAS), cloud storage etc.

The computer program **600** comprises instruction **610** e.g. program instruction, software code, that, when executed by processing circuitry cause the processing circuitry to perform the method **400** introduced herein with reference to **FIG. 8****.**

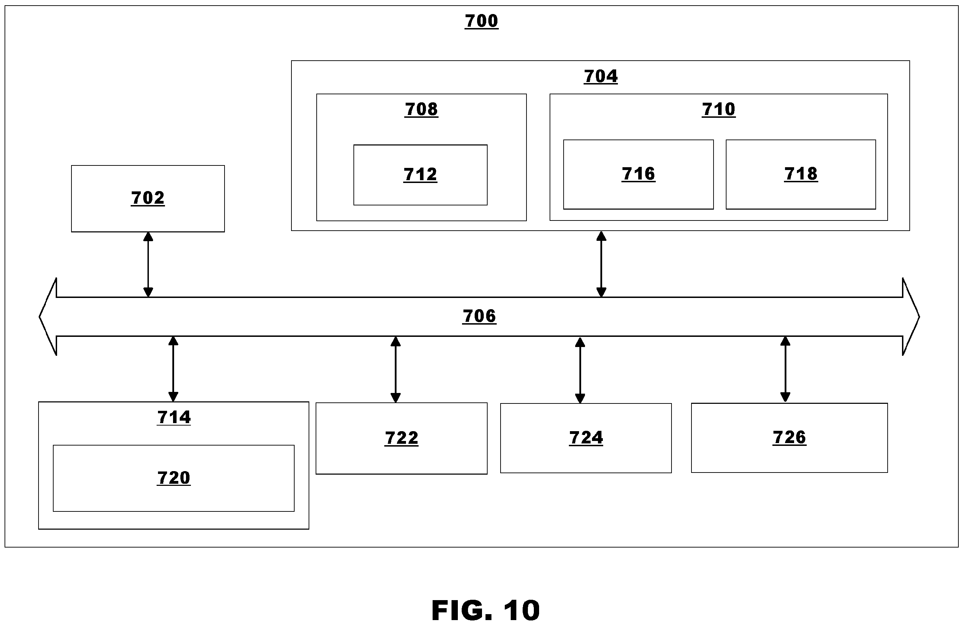

**FIG. 10** is a schematic diagram of a computer system **700** for implementing examples disclosed herein. The computer system **700** is adapted to execute instructions from a computer-readable medium to perform these and/or any of the functions or processing described herein. The computer system **700** may be connected (e.g., networked) to other machines in a LAN, an intranet, an extranet, or the Internet. While only a single device is illustrated, the computer system **700** may include any collection of devices that individually or jointly execute a set (or multiple sets) of instructions to perform any one or more of the methodologies discussed herein. The computer system **700** of **FIG. 10****,** may be the computer system **100** introduced with reference to **FIG. 2****.** Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **700** may comprise at least one computing device or electronic device capable of including firmware, hardware, and/or executing software instructions to implement the functionality described herein. The computer system **700** may include processing circuitry **702** (e.g., processing circuitry including one or more processor devices or control units), a memory **704,** and a system bus **706.** The processing circuitry **702** may be the processing circuitry **110** introduced with reference to **FIG. 3****.** The computer system **700** may include at least one computing device having the processing circuitry **702.** The system bus **706** provides an interface for system components including, but not limited to, the memory **704** and the processing circuitry **702.** The processing circuitry **702** may include any number of hardware components for conducting data or signal processing or for executing computer code stored in memory **704.** The processing circuitry **702** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **702** may further include computer executable code that controls operation of the programmable device.

The system bus **706** may be any of several types of bus structures that may further interconnect to a memory bus (with or without a memory controller), a peripheral bus, and/or a local bus using any of a variety of bus architectures. The memory **704** may be one or more devices for storing data and/or computer code for completing or facilitating methods described herein. The memory **704** may include database components, obstacle code components, script components, or other types of information structure for supporting the various activities herein. Any distributed or local memory device may be utilized with the systems and methods of this description. The memory **704** may be communicably connected to the processing circuitry **702** (e.g., via a circuit or any other wired, wireless, or network connection) and may include computer code for executing one or more processes described herein. The memory **704** may include non-volatile memory **708** (e.g., read-only memory (ROM), erasable programmable read-only memory (EPROM), electrically erasable programmable read-only memory (EEPROM), etc.), and volatile memory **710** (e.g., randomaccess memory (RAM)), or any other medium which can be used to carry or store desired program code in the form of machine-executable instructions or data structures and which can be accessed by a computer or other machine with processing circuitry **702.** A basic input/output system (BIOS) **712** may be stored in the non-volatile memory **708** and can include the basic routines that help to transfer information between elements within the computer system **700.**

The computer system **700** may further include or be coupled to a non-transitory computer-readable storage medium such as the storage device **714,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **714** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **714** and/or in the volatile memory **710,** which may include an operating system **716** and/or one or more program modules **718.** All or a portion of the examples disclosed herein may be implemented as a computer program **720** stored on a transitory or non-transitory computer-usable or computer-readable storage medium (e.g., single medium or multiple media), such as the storage device **714,** which includes complex programming instructions (e.g., complex computer-readable program code) to cause the processing circuitry **702** to carry out actions described herein. Thus, the computer-readable program code of the computer program **720** can comprise software instructions for implementing the functionality of the examples described herein when executed by the processing circuitry **702.** In some examples, the storage device **714** may be a computer program product (e.g., readable storage medium) storing the computer program **720** thereon, where at least a portion of a computer program **720** may be loadable (e.g., into a processor) for implementing the functionality of the examples described herein when executed by the processing circuitry **702.** The processing circuitry **702** may serve as a controller or control system for the computer system **700** that is to implement the functionality described herein.

The computer system **700** may include an input device interface **722** configured to receive input and selections to be communicated to the computer system **700** when executing instructions, such as from a keyboard, mouse, touch-sensitive surface, etc. Such input devices may be connected to the processing circuitry **702** through the input device interface **722** coupled to the system bus **706** but can be connected through other interfaces, such as a parallel port, an Institute of Electrical and Electronic Engineers (IEEE) 1394 serial port, a Universal Serial Bus (USB) port, an IR interface, and the like. The computer system **700** may include an output device interface **724** configured to forward output, such as to a display, a video display unit (e.g., a liquid crystal display (LCD) or a cathode ray tube (CRT)). The computer system **700** may include a communications interface **726** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Example 1. A computer system **100** comprising processing circuitry **110** configured to: obtain vehicle data **210** of a specific vehicle **10, 20, 30;** obtain map data **260** of a confined off-road area **1;** determine drivable area data **325** for the specific vehicle **10, 20, 30** within the confined off-road area **1** based on the vehicle data **210** and the map data **260;** and provide the drivable area data **325** for routing of the specific vehicle **10, 20, 30** within the confined off-road area **1.**

Example 2. The computer system **100** of example 1, wherein the processing circuitry **110** is further configured to: obtain mission data **230** for the specific vehicle **10, 20, 30,** the mission data **230** comprising an indication of a loading location **231** and/or an unloading location **233** within the confined off road area **1;** determine one or more permitted routing trajectories **335** for the specific vehicle **10, 20, 30** to travel to/from the loading location **231** and/or an unloading location **233** based on the drivable area data **325** and the mission data **230;** and select one of the one or more permitted routing trajectories **335** as a routing trajectory **345** for routing of the specific vehicle **10, 20, 30.**

Example 3. The computer system **100** of example 2, wherein the processing circuitry **110** is configured to: select the routing trajectory **345** based on an energy consumption indicator **337** and/or a vehicle component wear indicator **339** for the specific vehicle **10, 20, 30** to complete the permitted routing trajectories **335.**

Example 4. The computer system **100** of example 2 or 3, wherein the mission data **230** further comprises load weight data **235** indicating a weight of goods to be loaded at the loading location **231** and/or unloaded at the unloading location **233.**

Example 5. The computer system **100** of any one of examples 1 to 4, wherein the vehicle data **210** comprises weight data **213** for the specific vehicle **10, 20, 30,** the map data **260** comprises surface condition data **263** for the confined off-road area **1,** and the processing circuitry **110** is further configured to: determine the drivable area data **325** based on the weight data **213** and the surface condition data **263.**

Example 6. The computer system **100** of example 4 and 5, wherein the processing circuitry **110** is configured to: determine the permitted routing trajectories **335** further based on a weigh profile **338** for the specific vehicle **10, 20, 30** for traveling to/from the loading location **231** and/or the unloading location **233,** wherein the weight profile **338** is determined based on the weight data **213** of the specific vehicle **10, 20, 30** and the load weight data **235.**

Example 7. The computer system **100** of any one of examples 1 to 6, wherein the vehicle data **210** further comprises a traction capability **215** of the specific vehicle **10, 20, 30,** the map data **260** comprises obstacle data **265** indicating one or more obstacles **5** of the confined off-road data **1,** and the processing circuitry **110** is further configured to: determine the drivable area data **325** further based on the obstacle data **265** and the traction capability **215** of the specific vehicle **10, 20, 30.**

Example 8. The computer system **100** of example 7, wherein the traction capability **215** comprises one or more of a wheel base, a ground clearance, traction functionality or an available drive torque of the specific vehicle **10, 20, 30.**

Example 9. The computer system **100** of any one of examples 1 to 8, wherein the vehicle data **210** further comprises travel data **217** of the specific vehicle **10, 20, 30,** and the processing circuitry **110** is further configured to: determine the drivable area data **325** further based on the travel data **217** of the specific vehicle **10, 20, 30.**

Example 10. The computer system **100** of example 9, wherein the travel data **217** indicate at least one of a maximum speed, a minimum speed or a preferred travel speed.

Example 11. The computer system **100** of any one of examples 1 to 10, wherein the processing circuitry **110** is further configured to: obtain an indication of an update of the vehicle data **210** and/or the map data **260;** determine updated drivable area data **325'** for the specific vehicle **10, 20, 30** within the confined off-road area **1** based on updated vehicle data and/or updated map data; and provide the updated drivable area data **325'** for routing of the specific vehicle **10, 20, 30** within the confined off-road area **1.**

Example 12. The computer system **100** of any one of examples 2 to 11, wherein the processing circuitry **110** is further configured to: obtain an indication of an update of the mission data **210;** and determine one or more updated permitted routing trajectories **335'** for the specific vehicle **10, 20, 30** to travel to/from the loading location **231** and/or an unloading location **233** based on the drivable area data **325** and the updated mission data.

Example 13. The computer system **100** of any one of examples 1 to 12, wherein the processing circuitry **110** is further configured to: obtain an indication of a proposed change of the map data **260;** and determine proposed drivable area data **325"** for the specific vehicle **10, 20, 30** within the confined off-road area **1** based on the proposed updated map data **325";** and provide the proposed drivable area data **325"** and the drivable area data **325** as decision data for determining if the confined off-road area **1** is to be modified in line with the proposed change of the map data **260** or not.

Example 14. The computer system **100** of example 13, wherein the map data **260** comprises obstacle data **265** indicating one or more obstacles **5** of the confined off-road data **1** and the proposed change of the map data **260** comprises modification of at least one obstacle **5.**

Example 15. The computer system **100** of example 1, wherein the processing circuitry **110** is further configured to: obtain mission data **230** for the specific vehicle **10, 20, 30,** the mission data **230** comprising an indication of a loading location **231** and/or an unloading location **233** within the confined off road area **1;** determine one or more permitted routing trajectories **335** for the specific vehicle **10, 20, 30** to travel to/from the loading location **231** and/or an unloading location **233** based on the drivable area data **325** and the mission data **230;** and select one of the one or more permitted routing trajectories **335** as a routing trajectory **345** for routing of the specific vehicle **10, 20, 30;** wherein the processing circuitry **110** is configured to: select the routing trajectory **345** based on an energy consumption indicator **337** and/or a vehicle component wear indicator **339** for the specific vehicle **10, 20, 30** to complete the permitted routing trajectories **335;** wherein the mission data **230** further comprises load weight data **235** indicating a weight of goods to be loaded at the loading location **231** and/or unloaded at the unloading location **233;** wherein the vehicle data **210** comprises weight data **213** for the specific vehicle **10, 20, 30,** the map data **260** comprises surface condition data **263** for the confined off-road area **1,** and the processing circuitry **110** is further configured to: determine the drivable area data **325** based on the weight data **213** and the surface condition data **263;** wherein the processing circuitry **110** is configured to: determine the permitted routing trajectories **335** further based on a weigh profile **338** for the specific vehicle **10, 20, 30** for traveling to/from the loading location **231** and/or the unloading location **233,** wherein the weight profile **338** is determined based on the weight data **213** of the specific vehicle **10, 20, 30** and the load weight data **235;** wherein the vehicle data **210** further comprises a traction capability **215** of the specific vehicle **10, 20, 30,** the map data **260** comprises obstacle data **265** indicating one or more obstacles 5 of the confined off-road data **1,** and the processing circuitry **110** is further configured to: determine the drivable area data **325** further based on the obstacle data **265** and the traction capability **215** of the specific vehicle **10, 20, 30;** herein the traction capability **215** comprises one or more of a wheel base, a ground clearance, traction functionality or an available drive torque of the specific vehicle **10, 20, 30;** wherein the vehicle data **210** further comprises travel data **217** of the specific vehicle **10, 20, 30,** and the processing circuitry **110** is further configured to: determine the drivable area data **325** further based on the travel data **217** of the specific vehicle **10, 20, 30;** herein the travel data **217** indicate at least one of a maximum speed, a minimum speed or a preferred travel speed; wherein the processing circuitry **110** is further configured to: obtain an indication of an update of the vehicle data **210** and/or the map data **260;** determine updated drivable area data **325'** for the specific vehicle **10, 20, 30** within the confined off-road area **1** based on updated vehicle data and/or updated map data; and provide the updated drivable area data **325'** for routing of the specific vehicle **10, 20, 30** within the confined off-road area **1;** wherein the processing circuitry **110** is further configured to: obtain an indication of an update of the mission data **210;** and determine one or more updated permitted routing trajectories **335'** for the specific vehicle **10, 20, 30** to travel to/from the loading location **231** and/or an unloading location **233** based on the drivable area data **325** and the updated mission data; wherein the processing circuitry **110** is further configured to: obtain an indication of a proposed change of the map data **260;** and determine proposed drivable area data **325"** for the specific vehicle **10, 20, 30** within the confined off-road area **1** based on the proposed updated map data **325";** and provide the proposed drivable area data **325"** and the drivable area data **325** as decision data for determining if the confined off-road area **1** is to be modified in line with the proposed change of the map data **260** or not; wherein the map data **260** comprises obstacle data **265** indicating one or more obstacles **5** of the confined off-road data **1** and the proposed change of the map data **260** comprises modification of at least one obstacle **5.**

Example 16. A site management system **200** for a confined off-road area **1** comprising the computer system on any one of examples 1 to 15.

Example 17. The site management system **200** of example 16, wherein the off-road area 1 is a quarry or a mine.

Example 18. A computer implemented method **400** comprising: obtaining **410,** by processing circuitry **110** of a computer system **100,** vehicle data **210** of a specific vehicle **10, 20, 30;** obtaining **420,** by processing circuitry **110** of the computer system **100,** map data **260** of a confined off-road area **1;** determining, **430,** by processing circuitry **110** of the computer system **100,** drivable area data **325** for the specific vehicle **10, 20, 30** within the confined off-road area **1** based on the vehicle data **210** and the map data **260;** and providing **440,** by processing circuitry **110** of the computer system **100,** the drivable area data **325** for routing of the specific vehicle **10, 20, 30** within the confined off-road area **1.**

Example 19. A computer program product **500** comprising program code **610** for performing, when executed by processing circuitry **110,** the computer implemented method **400** of example 18.

Example 20. A non-transitory computer-readable storage medium **700** comprising instructions, which when executed by processing circuitry **110,** cause the processing circuitry 110 to perform the computer implemented method **400** of example 18.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system **(100)** comprising processing circuitry **(110)** configured to:
obtain vehicle data **(210)** of a specific vehicle **(10, 20, 30);**
obtain map data **(260)** of a confined off-road area **(1);**
determine drivable area data **(325)** for the specific vehicle **(10, 20, 30)** within the confined off-road area **(1)** based on the vehicle data **(210)** and the map data **(260);** and
provide the drivable area data **(325)** for routing of the specific vehicle **(10, 20, 30)** within the confined off-road area **(1).**

2. The computer system **(100)** of claim 1, wherein the processing circuitry **(110)** is further configured to:
obtain mission data **(230)** for the specific vehicle **(10, 20, 30),** the mission data **(230)** comprising an indication of a loading location **(231)** and/or an unloading location **(233)** within the confined off road area **(1);**
determine one or more permitted routing trajectories **(335)** for the specific vehicle **(10, 20, 30)** to travel to/from the loading location **(231)** and/or an unloading location **(233)** based on the drivable area data **(325)** and the mission data **(230);** and
select one of the one or more permitted routing trajectories **(335)** as a routing trajectory **(345)** for routing of the specific vehicle **(10, 20, 30).**

3. The computer system **(100)** of claim 2, wherein the processing circuitry **(110)** is configured to:
select the routing trajectory **(345)** based on an energy consumption indicator **(337)** and/or a vehicle component wear indicator **(339)** for the specific vehicle **(10, 20, 30)** to complete the permitted routing trajectories **(335).**

4. The computer system **(100)** of claim 2 or 3, wherein the mission data **(230)** further comprises load weight data **(235)** indicating a weight of goods to be loaded at the loading location **(231)** and/or unloaded at the unloading location **(233).**

5. The computer system **(100)** of any one of claims 1 to 4, wherein the vehicle data **(210)** comprises weight data **(213)** for the specific vehicle **(10, 20, 30),** the map data **(260)** comprises surface condition data **(263)** for the confined off-road area **(1),** and the processing circuitry **(110)** is further configured to:
determine the drivable area data **(325)** based on the weight data **(213)** and the surface condition data **(263).**

6. The computer system **(100)** of claim 4 and 5, wherein the processing circuitry **(110)** is configured to:
determine the permitted routing trajectories **(335)** further based on a weigh profile **(338)** for the specific vehicle **(10, 20, 30)** for traveling to/from the loading location **(231)** and/or the unloading location **(233),** wherein the weight profile **(338)** is determined based on the weight data **(213)** of the specific vehicle **(10, 20, 30)** and the load weight data **(235).**

7. The computer system **(100)** of any one of claims 1 to 6, wherein the vehicle data **(210)** further comprises a traction capability **(215)** of the specific vehicle **(10, 20, 30),** the map data **(260)** comprises obstacle data **(265)** indicating one or more obstacles **(5)** of the confined off-road data **(1),** and the processing circuitry **(110)** is further configured to:
determine the drivable area data **(325)** further based on the obstacle data **(265)** and the traction capability **(215)** of the specific vehicle **(10, 20, 30).**

8. The computer system **(100)** of claim 7, wherein the traction capability **(215)** comprises one or more of a wheel base, a ground clearance, traction functionality or an available drive torque of the specific vehicle **(10, 20, 30).**

9. The computer system **(100)** of any one of claims 1 to 8, wherein the processing circuitry **(110)** is further configured to:
obtain an indication of a proposed change of the map data **(260);** and
determine proposed drivable area data **(325")** for the specific vehicle **(10, 20, 30)** within the confined off-road area **(1)** based on the proposed updated map data **(325");** and
provide the proposed drivable area data **(325")** and the drivable area data **(325)** as decision data for determining if the confined off-road area **(1)** is to be modified in line with the proposed change of the map data **(260)** or not.

10. The computer system **(100)** of claim 9, wherein the map data **(260)** comprises obstacle data **(265)** indicating one or more obstacles **(5)** of the confined off-road data **(1)** and the proposed change of the map data **(260)** comprises modification of at least one obstacle **(5).**

11. The computer system **(100)** of claim 1, wherein the processing circuitry **(110)** is further configured to: obtain mission data **(230)** for the specific vehicle **(10, 20, 30),** the mission data **(230)** comprising an indication of a loading location **(231)** and/or an unloading location **(233)** within the confined off road area **(1);** determine one or more permitted routing trajectories **(335)** for the specific vehicle **(10, 20, 30)** to travel to/from the loading location **(231)** and/or an unloading location **(233)** based on the drivable area data **(325)** and the mission data **(230);** and select one of the one or more permitted routing trajectories **(335)** as a routing trajectory **(345)** for routing of the specific vehicle **(10, 20, 30);** wherein the processing circuitry **(110)** is configured to: select the routing trajectory **(345)** based on an energy consumption indicator **(337)** and/or a vehicle component wear indicator **(339)** for the specific vehicle **(10, 20, 30)** to complete the permitted routing trajectories **(335);** wherein the mission data **(230)** further comprises load weight data **(235)** indicating a weight of goods to be loaded at the loading location **(231)** and/or unloaded at the unloading location **(233);** wherein the vehicle data **(210)** comprises weight data **(213)** for the specific vehicle **(10, 20, 30),** the map data **(260)** comprises surface condition data **(263)** for the confined off-road area **(1),** and the processing circuitry **(110)** is further configured to: determine the drivable area data **(325)** based on the weight data **(213)** and the surface condition data **(263);** wherein the processing circuitry **(110)** is configured to: determine the permitted routing trajectories **(335)** further based on a weigh profile **(338)** for the specific vehicle **(10, 20, 30)** for traveling to/from the loading location **(231)** and/or the unloading location **(233),** wherein the weight profile **(338)** is determined based on the weight data **(213)** of the specific vehicle **(10, 20, 30)** and the load weight data **(235);** wherein the vehicle data **(210)** further comprises a traction capability **(215)** of the specific vehicle **(10, 20, 30),** the map data **(260)** comprises obstacle data **(265)** indicating one or more obstacles **(5)** of the confined off-road data **(1),** and the processing circuitry **(110)** is further configured to: determine the drivable area data **(325)** further based on the obstacle data **(265)** and the traction capability **(215)** of the specific vehicle **(10, 20, 30);** wherein the traction capability **(215)** comprises one or more of a wheel base, a ground clearance, traction functionality or an available drive torque of the specific vehicle **(10, 20, 30);** wherein the processing circuitry **(110)** is further configured to: obtain an indication of a proposed change of the map data **(260);** and determine proposed drivable area data **(325")** for the specific vehicle **(10, 20, 30)** within the confined off-road area **(1)** based on the proposed updated map data **(325");** and provide the proposed drivable area data **(325")** and the drivable area data **(325)** as decision data for determining if the confined off-road area **(1)** is to be modified in line with the proposed change of the map data **(260)** or not; wherein the map data **(260)** comprises obstacle data **(265)** indicating one or more obstacles **(5)** of the confined off-road data **(1)** and the proposed change of the map data **(260)** comprises modification of at least one obstacle **(5);** wherein the off-road area **(1)** is a quarry or a mine.

12. A site management system **(200)** for a confined off-road area **(1)** comprising the computer system of any one of claims 1 to 11.

13. A computer implemented method **(400)** comprising:
obtaining **(410),** by processing circuitry **(110)** of a computer system **(100),** vehicle data **(210)** of a specific vehicle **(10, 20, 30);**
obtaining **(420),** by processing circuitry **(110)** of the computer system **(100),** map data **(260)** of a confined off-road area **(1);**
determining, **(430),** by processing circuitry **(110)** of the computer system **(100),** drivable area data **(325)** for the specific vehicle **(10, 20, 30)** within the confined off-road area **(1)** based on the vehicle data **(210)** and the map data **(260);** and
providing **(440),** by processing circuitry **(110)** of the computer system **(100),** the drivable area data **(325)** for routing of the specific vehicle **(10, 20, 30)** within the confined off-road area **(1).**

14. A computer program product **(500)** comprising program code **(610)** for performing, when executed by processing circuitry **(110),** the computer implemented method **(400)** of claim 13.

15. A non-transitory computer-readable storage medium **(700)** comprising instructions, which when executed by processing circuitry **(110),** cause the processing circuitry **(110)** to perform the computer implemented method **(400)** of claim 13.

## Amended claims

### Amended claims in accordance with Rule 137(2) EPC.

1. A computer system **(100)** comprising processing circuitry **(110)** configured to:
obtain vehicle data **(210)** of a specific vehicle **(10, 20, 30);**
obtain map data **(260)** of a confined off-road area **(1);**
determine drivable area data **(325)** for the specific vehicle **(10, 20, 30)** within the confined off-road area **(1)** based on the vehicle data **(210)** and the map data **(260);** and
provide the drivable area data **(325)** for routing of the specific vehicle **(10, 20, 30)** within the confined off-road area **(1),** wherein the processing circuitry **(110)** is further configured to:
obtain mission data **(230)** for the specific vehicle **(10, 20, 30),** the mission data **(230)** comprising an indication of a loading location **(231)** and/or an unloading location **(233)** within the confined off road area **(1);**
determine one or more permitted routing trajectories **(335)** for the specific vehicle **(10, 20, 30)** to travel to/from the loading location **(231)** and/or an unloading location **(233)** based on the drivable area data **(325)** and the mission data **(230);** and
select one of the one or more permitted routing trajectories **(335)** as a routing trajectory **(345)** for routing of the specific vehicle **(10, 20, 30),**
wherein the mission data **(230)** further comprises load weight data **(235)** indicating a weight of goods to be loaded at the loading location **(231)** and/or unloaded at the unloading location **(233).**

2. The computer system **(100)** of claim 1, wherein the processing circuitry **(110)** is configured to:
select the routing trajectory **(345)** based on an energy consumption indicator **(337)** and/or a vehicle component wear indicator **(339)** for the specific vehicle **(10, 20,** 30) to complete the permitted routing trajectories **(335).**

3. The computer system **(100)** of any one of claims 1 to 2, wherein the vehicle data **(210)** comprises weight data **(213)** for the specific vehicle **(10, 20, 30),** the map data **(260)** comprises surface condition data **(263)** for the confined off-road area **(1),** and the processing circuitry **(110)** is further configured to:
determine the drivable area data **(325)** based on the weight data **(213)** and the surface condition data **(263).**

4. The computer system **(100)** of claim 3, wherein the processing circuitry **(110)** is configured to:
determine the permitted routing trajectories **(335)** further based on a weigh profile **(338)** for the specific vehicle **(10, 20, 30)** for traveling to/from the loading location **(231)** and/or the unloading location **(233),** wherein the weight profile **(338)** is determined based on the weight data **(213)** of the specific vehicle **(10, 20, 30)** and the load weight data **(235).**

5. The computer system **(100)** of any one of claims 1 to 4, wherein the vehicle data **(210)** further comprises a traction capability **(215)** of the specific vehicle **(10, 20, 30)** describing an ability of the vehicle to traverse obstacles, the map data **(260)** comprises obstacle data **(265)** indicating one or more obstacles (5) of the confined off-road data **(1),** and the processing circuitry **(110)** is further configured to:
determine the drivable area data **(325)** further based on the obstacle data **(265)** and the traction capability **(215)** of the specific vehicle **(10, 20, 30).**

6. The computer system **(100)** of claim 5, wherein the traction capability **(215)** comprises one or more of a wheel base, a ground clearance, traction functionality or an available drive torque of the specific vehicle **(10, 20, 30).**

7. The computer system **(100)** of any one of claims 1 to 6, wherein the processing circuitry **(110)** is further configured to:
obtain an indication of a proposed change of the map data **(260);** and
determine proposed drivable area data **(325")** for the specific vehicle **(10, 20, 30)** within the confined off-road area **(1)** based on the proposed updated map data **(325");** and
provide the proposed drivable area data **(325")** and the drivable area data **(325)** as decision data for determining if the confined off-road area **(1)** is to be modified in line with the proposed change of the map data **(260)** or not.

8. The computer system **(100)** of claim 7, wherein the map data **(260)** comprises obstacle data **(265)** indicating one or more obstacles **(5)** of the confined off-road data (1) and the proposed change of the map data **(260)** comprises modification of at least one obstacle **(5).**

9. The computer system **(100)** of claim 1, wherein the processing circuitry **(110)** is further configured to: obtain mission data **(230)** for the specific vehicle **(10, 20, 30),** the mission data **(230)** comprising an indication of a loading location **(231)** and/or an unloading location **(233)** within the confined off road area **(1);** determine one or more permitted routing trajectories **(335)** for the specific vehicle **(10, 20, 30)** to travel to/from the loading location **(231)** and/or an unloading location **(233)** based on the drivable area data **(325)** and the mission data **(230);** and select one of the one or more permitted routing trajectories **(335)** as a routing trajectory **(345)** for routing of the specific vehicle **(10, 20, 30);** wherein the processing circuitry **(110)** is configured to: select the routing trajectory **(345)** based on an energy consumption indicator **(337)** and/or a vehicle component wear indicator **(339)** for the specific vehicle **(10, 20, 30)** to complete the permitted routing trajectories **(335);** wherein the mission data **(230)** further comprises load weight data **(235)** indicating a weight of goods to be loaded at the loading location **(231)** and/or unloaded at the unloading location **(233);** wherein the vehicle data **(210)** comprises weight data **(213)** for the specific vehicle **(10, 20, 30),** the map data **(260)** comprises surface condition data **(263)** for the confined off-road area **(1),** and the processing circuitry **(110)** is further configured to: determine the drivable area data **(325)** based on the weight data **(213)** and the surface condition data **(263);** wherein the processing circuitry **(110)** is configured to: determine the permitted routing trajectories **(335)** further based on a weigh profile **(338)** for the specific vehicle **(10, 20, 30)** for traveling to/from the loading location **(231)** and/or the unloading location **(233),** wherein the weight profile **(338)** is determined based on the weight data **(213)** of the specific vehicle **(10, 20, 30)** and the load weight data **(235);** wherein the vehicle data **(210)** further comprises a traction capability **(215)** of the specific vehicle **(10, 20, 30),** the map data **(260)** comprises obstacle data **(265)** indicating one or more obstacles **(5)** of the confined off-road data **(1),** and the processing circuitry **(110)** is further configured to: determine the drivable area data **(325)** further based on the obstacle data **(265)** and the traction capability **(215)** of the specific vehicle **(10, 20, 30);** wherein the traction capability **(215)** comprises one or more of a wheel base, a ground clearance, traction functionality or an available drive torque of the specific vehicle **(10, 20, 30);** wherein the processing circuitry **(110)** is further configured to: obtain an indication of a proposed change of the map data **(260);** and determine proposed drivable area data (**325"**) for the specific vehicle **(10, 20, 30)** within the confined off-road area **(1)** based on the proposed updated map data **(325");** and provide the proposed drivable area data (**325"**) and the drivable area data **(325) as** decision data for determining if the confined off-road area **(1)** is to be modified in line with the proposed change of the map data **(260)** or not; wherein the map data **(260)** comprises obstacle data **(265)** indicating one or more obstacles **(5)** of the confined off-road data **(1)** and the proposed change of the map data **(260)** comprises modification of at least one obstacle **(5);** wherein the off-road area **(1) is** a quarry or a mine.

10. A site management system **(200)** for a confined off-road area **(1)** comprising the computer system of any one of claims 1 to 9.

11. A computer implemented method **(400)** comprising:
obtaining **(410),** by processing circuitry **(110)** of a computer system **(100),** vehicle data **(210)** of a specific vehicle **(10, 20, 30);**
obtaining **(420),** by processing circuitry **(110)** of the computer system **(100),** map data **(260)** of a confined off-road area **(1);**
determining, **(430),** by processing circuitry **(110)** of the computer system **(100),** drivable area **data (325)** for the specific vehicle **(10, 20, 30)** within the confined off-road area **(1)** based on the vehicle data **(210)** and the map data **(260);** and
providing **(440),** by processing circuitry **(110)** of the computer system **(100),** the drivable area data **(325)** for routing of the specific vehicle **(10, 20, 30)** within the confined off-road area **(1),** the method further comprising:
obtaining, by processing circuitry **(110)** of a computer system **(100),** mission data **(230)** for the specific vehicle **(10, 20, 30),** the mission data **(230)** comprising an indication of a loading location **(231)** and/or an unloading location **(233)** within the confined off road area **(1);**
determining, by processing circuitry **(110)** of a computer system **(100),** one or more permitted routing trajectories **(335)** for the specific vehicle **(10, 20, 30)** to travel to/from the loading location **(231)** and/or an unloading location **(233)** based on the drivable area data **(325)** and the mission data **(230);** and
selecting, by processing circuitry **(110)** of a computer system **(100),** one of the one or more permitted routing trajectories **(335)** as a routing trajectory **(345)** for routing of the specific vehicle **(10, 20, 30),**
wherein the mission data **(230)** further comprises load weight data **(235)** indicating a weight of goods to be loaded at the loading location **(231)** and/or unloaded at the unloading location **(233).**

12. A computer program product **(500)** comprising program code **(610)** for performing, when executed by processing circuitry **(110),** the computer implemented method **(400)** of claim 11.

13. A non-transitory computer-readable storage medium (700) comprising instructions, which when executed by processing circuitry (110), cause the processing circuitry (110) to perform the computer implemented method (400) of claim 11.
